# EUROPÄISCHE PATENTSCHRIFT

(11) **EP 0 652 425 B1**
(45) Veröffentlichungstag und Bekanntmachung des Hinweises auf die Patenterteilung: **10.06.1998**
(21) Anmeldenummer: 94115852.9
(22) Anmeldetag: 07.10.1994
(51) Int. Cl.: G01L 23/08, G01M 15/00

(54) **Vorrichtung zur Auswertung der Verdichtung eines mehrzylindrigen Verbrennungsmotors mit Anlasserstromzange und Drucksensor**
Device for evaluating the compression of a multi-cylinder combustion engine with clip-on starter current meter and pressure sensor
Dispositif pour évaluer la compression d'un moteur à combustion à plusieurs cylindres avec pince de courant de starter et capteur de pression

(30) Priorität: 05.11.1993 DE 4337720
(43) Veröffentlichungstag der Anmeldung: 10.05.1995
(73) Patentinhaber: Bayerische Motoren Werke Aktiengesellschaft, 80788 München (DE)
(72) Erfinder: Russler, Günter, D-85716 Unterschleissheim (DE); Schmiedl, Rudolf, D-82205 Gilching (DE); Schöllhorn, Elmar, D-85452 Moosinning (DE)

(56) Entgegenhaltungen:
- EP-A- 0 269 606
- DE-A- 2 140 172
- DE-B- 2 709 128
- FR-A- 2 369 556
- US-A- 3 765 233
- PATENT ABSTRACTS OF JAPAN vol. 7 no. 37 (M-193) [1182] ,15.Februar 1983 & JP-A-57 188729 (HITACHI ZOSEN KK.) 19.November 1982,
- PATENT ABSTRACTS OF JAPAN vol. 14 no. 392 (P-1096) ,23.August 1990 & JP-A-02 147934 (HINO MOTORS LTD.) 6.Juni 1990,
- PATENT ABSTRACTS OF JAPAN vol. 13 no. 353 (P-913) ,8.August 1989 & JP-A-01 113630 (FUJI HEAVY IND LTD) 2.Mai 1989,

## Beschreibung

Die Erfindung betrifft eine Vorrichtung zur Auswertung der Verdichtung jedes Zylinders eines mehrzylindrigen Verbrennungsmotors in Kraftfahrzeugen nach dem Oberbegriff des Patentanspruchs 1.
Eine derartige Vorrichtung ist beispielsweise aus der DE-OS 25 09 199 bekannt. Bei dieser bekannten Vorrichtung ist eine Meßvorrichtung zur Erfassung eines dem Anlasserstrom eines elektrischen Anlassers proportionalen Signals vorgesehen. Dieses Signal wird einer Auswerteeinheit zugeführt, die jeweils einen Amplituden-Maximalwert in vorgegebenen Zeitintervallen erfaßt und jeden Amplituden-Maximalwert mit dem höchsten dieser Amplituden-Maximalwerte vergleicht. Unterscheidet sich einer der Amplituden-Maximalwerte von dem höchsten der Amplituden-Maximalwerte um mehr als eine vorbestimmte Abweichung, wird von der Auswerteeinheit eine Warnanzeige aktiviert.
Mit dieser bekannten Vorrichtung werden nur relative Verdichtungsunterschiede zwischen den einzelnen Zylindern angezeigt, so daß nur ein einzelner defekter Zylinder, jedoch nicht eine allgemeine Verschlechterung aller Zylinder erkannt wird.

Zur absoluten Bestimmung der Verdichtung aller Zylinder ist beispielsweise aus der DE 40 01 475 Al bekannt, jeden Zylinder mit einer eigenen Meßkammer zur Messung des Zylinderdruckes zwischen dem Zylinderkopf und dem Zylinderblock zu versehen.
Eine derartige Druckmeßvorrichtung für jeden Zylinder ist jedoch aufwendig und kostenintensiv.

Es ist Aufgabe der Erfindung, eine Vorrichtung zur Auswertung der Verdichtung jedes Zylinders eingangs genannter Art derart zu verbessern, daß auf einfache Weise eine absolute Verdichtungsauswertung vorgenommen werden kann.

Diese Aufgabe wird durch die kennzeichenden Merkmale des Patentanspruchs 1 gelöst.
Erfindungsgemäß ist an die Auswerteeinheit, an die eine erste Meßvorrichtung zur Erfassung eines dem Anlasserstrom proportionalen Signals angeschlossen ist, eine zweite Meßvorrichtung in Form eines Drucksensors zur Erfassung des Zylinderdrucks vorzugsweise eines einzigen Zylinders angeschlossen. Die Auswerteeinheit ermittelt aus dem erfaßten Zylinder-Maximaldruckwert und dem Amplituden-Maximalwert des dem Anlasserstrom proportionalen Signals, der gleichzeitig mit dem Zylinder-Maximaldruckwert erfaßt wird, einen Proportionalitätsfaktor. Durch diesen Proportionalitätsfaktor werden die Zylinder-Maximaldruckwerte der nicht mit einem Drucksensor versehenen Zylinder aus den Amplituden-Maximalwerten des dem Anlasserstrom proportionalen Signals berechnet, die dem Amplituden-Maximalwert folgen, der gleichzeitig mit dem Zylinder-Maximaldruckwert auftritt und erfaßt wird.

Der Anlaßvorgang zur Auswertung des dem Anlasserstrom proportionalen Signals wird beispielsweise durch das Schließen des Zündschloßschalters vorgenommen. Dabei werden z.B. bekannte Maßnahmen ergriffen, um das tatsächliche Anlassen der Brennkraftmaschine zu verhindern. Nach der Auswertung ist darauf zu achten, daß der Fehlerspeicher eines eigendiagnosefähigen Motorsteuergerätes gelöscht wird, da das Motorsteuergerät bei diesem verhinderten Anlaßvorgang eventuell Fehler erkennt und abspeichert.

Mit der erfindungsgemäßen Vorrichtung werden die Amplituden-Werte des dem Anlasserstrom proportionalen Signals bezügliche eines absoluten Zylinderdruckwertes kalibriert. Somit kann jedem Amplituden-Wert des dem Anlasserstrom proportionalen Signals ein Zylinderdruckwert zugeordnet werden. Da bekannterweise bei jeder Verdichtung eines Zylinders ein Amplituden-Maximalwert des dem Anlasserstrom proportionalen Signals auftritt, kann durch die erfindungsgemäße Vorrichtung jedem Amplituden-Maximalwert zum einen ein bestimmter Zylinder und zum anderen ein absoluter Zylinderdruck zugeordnet werden. Durch die Messung eines einzigen Zylinderdrucks können die Zylinderdruckwerte aller anderen Zylinder berechnet werden. Dadurch ist eine sehr genaue und einfache absolute Auswertung der Verdichtung jedes Zylinders möglich. Darüber hinaus ist mit der erfindungsgemäßen Vorrichtung eine automatische Erkennung der Zylinderanzahl möglich. Weiterhin ist z.B. bei einer Kombination der erfindungsgemäßen Vorrichtung mit einem Nockenwellengebersystem eine Auswertung der Verdichtung der Zylinder mit automatischer Zylindererkennung gegeben.

Eine vorteilhafte Weiterbildung der Erfindung ist der Gegenstand des Patentanspruchs 2.
Erfindungsgemäß ist der Drucksensor zur Messung des Zylinderdrucks anstelle einer Zündkerze in den Brennraum des Zylinders einschraubbar.
Mit dieser erfindungsgemäßen Weiterbildung ist weder eine zusätzliche Bohrung noch eine zusätzliche Meßkammer im Zylinder notwendig. Eine bereits vorhandene Bohrung wird multifunktional ausgenützt.

Eine weitere vorteilhafte Ausgestaltung der Erfindung ist der Gegenstand des Patentanspruchs 3.
Erfindungsgemäß wird der Anlaßvorgang künstlich solange aufrechterhalten, bis sich eine konstante Drehzahl des Anlassermotors eingestellt hat. Erst dann wird mit der Berechnung der Zylinder-Maximaldruckwerte bzw. mit der Auswertung der Verdichtung der einzelnen Zylinder begonnen.
Mit dieser erfindungsgemäßen Ausgestaltung wird verhindert, daß aus Amplituden-Maximalwerten, die sich aufgrund von Drehzahlschwankungen des Anlassermotors verändern, fälschlicherweise auf Verdichtungsunterschiede zwischen den Zylindern geschlossen wird.

Eine weitere vorteilhafte Ausgestaltung der Erfindung ist der Gegenstand des Patentanspruchs 4.
Der Anlaßvorgang wird erfindungsgemäß nicht durch Schließen des Zündschloßschalters vorgenommen, sondern durch eine beliebige andere Testanlaßvorrichtung, wenn der Zündschloßschalter mit einem Einschalteingang eines Steuergerätes verbunden ist.
Durch diese erfindungsgemäße Ausgestaltung wird verhindert, daß der Motor tatsächlich gestartet wird oder daß beispielsweise ein mit einem Diagnoseprogramm ausgestattetes Motorsteuergerät unbeabsichtigt durch den künstlich verlängerten Anlaßvorgang einen Fehler im Fehlerspeicher ablegt.

In der Zeichnung ist ein Ausführungsbeispiel der Erfindung dargestellt. Es zeigt
- Fig. 1: eine erfindungsgemäße Vorrichtung am Beispiel eines Vierzylindermotors,
- Fig. 2: einen charakteristischen Signalverlauf des dem Anlasserstrom proportionalen Signals und
- Fig. 3: den Druckverlauf des in einem Zylinder gemessenen Druckes.

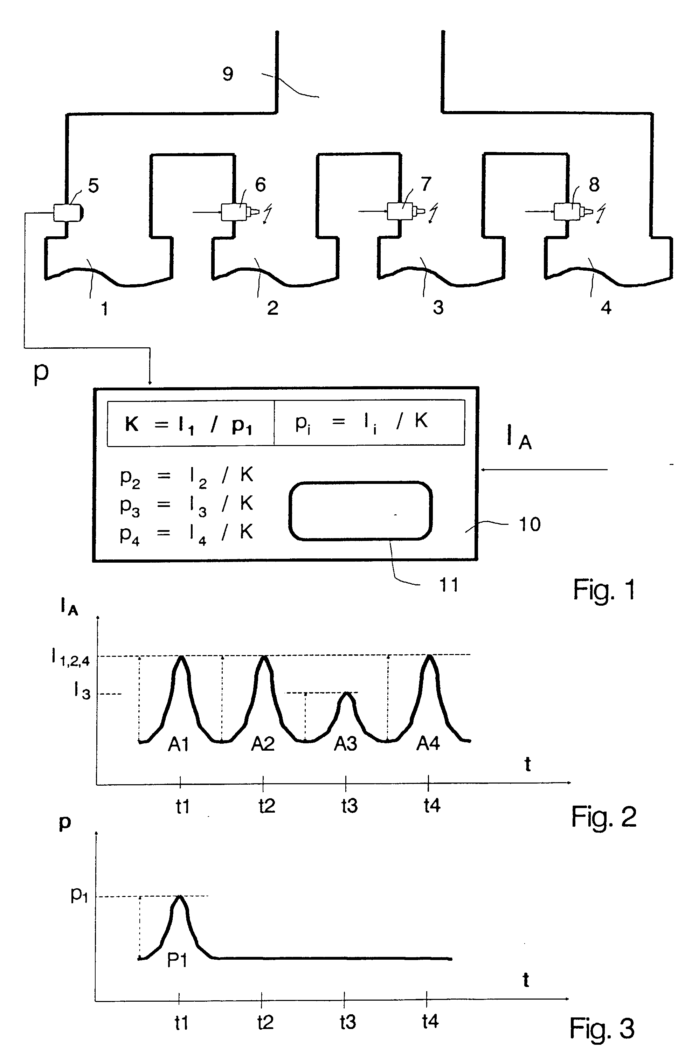

Fig. 1 zeigt einen Verbrennungsmotor mit vier Zylindern 1, 2, 3, 4. Die Brennräume der Zylinder 1, 2, 3, 4 werden über eine Saugrohranlage 9 mit Frischluft versorgt. In den Brennräumen der Zylinder 2, 3 und 4 ist wie üblich zum Zünden des Kraftstoff-Luft-Gemisches jeweils eine Zündkerze 6, 7 und 8 angeordnet. Im Brennraum des Zylinders 1 ist anstelle einer Zündkerze ein Drucksensor 5 angeordnet. Vom Drucksensor 5 führt eine Leitung zu einem Eingang einer Auswerteeinheit 10. Diese Leitung liefert ein dem mit dem Drucksensor 5 erfaßten Druck proportionales Signal p. Ein weiteres Eingangssignal der Auswerteeinheit 10 ist ein dem Anlasserstrom eines hier nicht dargestellten Anlassers proportionales Signal I_{A}.

Der elektrische Anlasser ist üblicherweise ein Elektromotor, der über ein Ritzel, das in die Schwungscheibe des Verbrennungsmotors eingreift, den Verbrennungsmotor andreht. Zu jedem Verdichtungshub eines Zylinders steigt das Drehmoment an, das der Anlasser zum Weiterdrehen des Verbrennungsmotors benötigt. Dadurch entstehen bei jedem Verdichtungshub eines Zylinders Amplituden-Maximalwerte beim Anlasserstrom, um den Anlasser und damit den Verbrennungsmotor mit konstanter Drehzahl trotz erhöhtem Drehmoment weiterzudrehen. Diese Amplituden-Maximalwerte des Anlasserstromes bzw. des diesem Anlasserstrom proportionalen Signals sind wiederum proportional zum Zylinderdruck während eines Verdichtungshubes. Der Zylinderdruck während eines Verdichtungshubes wiederum ist proportional zur Verdichtungsgüte eines Zylinders.

Die Auswerteeinheit 10 mißt erfindungsgemäß während des Verdichtungshubes des ersten Zylinders 1 den Zylinder-Maximaldruckwert p₁ und gleichzeitig den Amplituden-Maximalwert I₁ des dem Anlasserstrom proportionalen Signals I_{A}. Aus dem Verhältnis des ersten Amplituden-Maximalwertes I₁ zu dem gemessenen Zylinder-Maximaldruckwert p₁ wird der Proportionalitätsfaktor K bestimmt. Mittels des Proportionalitätsfaktors K und den folgenden Amplituden-Maximalwerten I₂, I₃, I₄, die jeweils zu jedem auf den ersten Zylinder 1 folgenden Verdichtungshub des Zylinders 2, 3 und 4 erfaßt werden, werden die Zylinderdruckwerte p₂, p₃, p₄ während der Verdichtungshübe der Zylinder 2, 3 und 4 berechnet. In einem Anzeigenfeld 11 können beispielsweise die Druckwerte p₁, p₂, p₃, p₄ der Zylinder 1, 2, 3 und 4 dargestellt werden.

In Fig. 2 ist der Verlauf eines dem Anlasserstrom proportionalen Signals I_{A} über der Zeit t dargestellt. Der Verlauf dieses Signals weist vier sich jeweils wiederholende Amplituden Al bis A4 auf, wobei die Amplitude A3 einen Amplituden-Maximalwert I₃ aufweist, der wesentlich kleiner als die Amplituden-Maximalwerte I₁, I₂ und I₄ ist. Aus Fig. 2 ist zwar ersichtlich, daß ein Zylinder eine verschlechterte Verdichtung gegenüber den anderen Zylindern aufweist, wobei jedoch weder ersichtlich ist, welcher Zylinder dem Amplituden-Maximalwert I₃ zuzuordnen ist, noch, welcher absolute Zylinderdruck diesem Amplituden-Maximalwert I₃ entspricht. Nach Fig. 2 ist also nur eine relative Aussage über die Verdichtung der einzelnen Zylinder möglich. Es muß also eine zusätzliche Maßnahme ergriffen werden, um die einzelnen Amplituden A1 bis A4 den einzelnen Zylindern 1 bis 4 zuordnen zu können. Weiterhin ist eine Bezugsgröße nötig, um den Amplituden-Maximalwerten I₁ bis I₄ einen absoluten Zylinderdruck p zuordnen zu können.

Diese genaue Zylinder- und Zylinderdruck-Zuordnung ist erfindungsgemäß durch den Drucksensor 5 in dem Zylinder 1 und in Verbindung mit der bekannten Zündreihenfolge möglich. In Fig. 3 ist der Verlauf des Zylinderdruckes p des mit dem Drucksensor 5 im Zylinder 1 erfaßten Zylinderdruckes p dargestellt. Beim Verdichtungshub des ersten Zylinders 1 zum Zeitpunkt tl tritt gleichzeitig mit der Amplitude Al des dem Anlasserstrom proportionalen Signals I_{A} die Amplitude P1 des Druckes p auf. Der Maximaldruckwert der Amplitude P1 ist der Zylinder-Maximaldruckwert p₁. Zu den Zeitpunkten t2 bis t4, d. h. bei den Verdichtungshüben der Zylinder 2 bis 4, treten nur die Amplituden A2 bis A4 des dem Anlasserstrom proportionalen Signals I_{A} auf. Mit dem Verlauf des durch den einzigen Drucksensor 5 im Zylinder 1 gemessenen Zylinderdruckes p kann zum einen dem Zylinder 1 die Amplitude Al und die Amplituden A2 bis A4 den folgenden Zylindern 2 bis 4 zugeordnet werden. Zum anderen ist ein Proportionalitätsfaktor K aus dem der Amplitude Al zugeordneten Amplituden-Maximalwert I₁ und dem Zylinder-Maximaldruckwert p₁ der Amplitude P1 ermittelbar.

Mit diesem erfindungsgemäßen Ausführungsbeispiel ist nur ein Drucksensor in einem Zylinder notwendig, um die absoluten Zylinderdruckwerte aller Zylinder zu bestimmen. Das dem Anlasserstrom proportionale Signal wird beispielsweise mittels einer Stromzange erfaßt, wodurch keine weitere Veränderung am Verbrennungsmotor als nur das Wechseln eines Drucksensors mit einer Zündkerze vorgenommen werden muß. Z.B. in Verbindung mit dem Signal einer Nockenwelle ist auch eine automatische Zylindererkennung möglich, so daß der Werkstattfachmann den Drucksensor nicht zwingend an einem bestimmten, sondern an einem beliebigen Zylinder anschließen kann, um die zylinderzugeordneten absoluten Druckwert zu ermitteln.

## Patentansprüche

1. Vorrichtung zur Auswertung der Verdichtung der Zylinder eines mehrzylindrigen Verbrennungsmotors in Kraftfahrzeugen mit einem elektrischen Anlasser, die Vorrichtung enthaltend eine an eine Auswerteeinheit (10) angeschlossene Meßvorrichtung zur Erfassung eines dem Anlasserstrom proportionalen Signals, dadurch gekennzeichnet, daß an die Auswerteeinheit (10) ein Drucksensor (5) zur Erfassung des Zylinderdrucks (p) eines Zylinders (1) angeschlossen ist und daß die Auswerteeinheit (10) aus einem erfaßbaren Zylinder-Maximaldruckwert (p₁) und einem Amplituden-Maximalwert (I₁) des dem Anlasserstrom proportionalen Signals (I_{A}), der gleichzeitig mit dem Zylinder-Maximaldruckwert (p₁) erfaßbar ist, einen Proportionalitätsfaktor (K) ermittelt, durch den die Zylinder-Maximaldruckwerte (p₂, p₃, p₄) der nicht mit einem Drucksensor versehenen Zylinder (2, 3, 4) aus den diesen Zylindern (2, 3, 4) zugeordneten Amplituden-Maximalwerten (I₂, I₃, I₄) berechbar sind.

2. Vorrichtung nach Patentanspruch 1, dadurch gekennzeichnet, daß der Drucksensor (5) anstelle einer Zündkerze in den Brennraum des Zylinders (1) einschraubbar ist.

3. Vorrichtung nach Patentanspruch 1 oder 2, dadurch gekennzeichnet, daß die Berechnung der Zylinder-Maximaldruckwerte (p₂, p₃, p₄) startbar ist, wenn sich eine konstante Anlasserdrehzahl eingestellt hat.

4. Vorrichtung nach einem der Patentansprüche 1 bis 3, dadurch gekennzeichnet, daß der Anlaßvorgang durch eine Testanlaßvorrichtung, die nicht zum Schließen des Zündschloßschalters führt, durchführbar ist, wenn der Zündschloßschalter mit einem Einschalteingang eines Steuergerätes verbunden ist.

## Claims

1. A device for evaluating the compression in the cylinders of a multi-cylinder combustion engine in motor vehicles comprising an electric starter, the device containing a measuring device connected to an evaluating unit (10) for detecting a signal proportional to the starter current, **characterised in that** a pressure sensor (5) for detecting the pressure (p) of a cylinder (1) is connected to the evaluating unit (10), and the evaluating unit (10) uses a detectable maximum cylinder pressure (p₁) and a maximum amplitude (I₁) of the signal (I_{A}) proportional to the starter current, which is detectable at the same time as the maximum cylinder pressure (p₁), to obtain a proportionality factor (K) whereby the maximum pressures (p₂, p₃, p₄) of the cylinders (2, 3, 4) not provided with a pressure sensor can be calculated from the maximum amplitudes (I₂, I₃, I₄) associated with the said cylinders (2, 3, 4).

2. A device according to claim 1, **characterised in that** the pressure sensor (5) can be screwed in place of a spark plug in the cylinder combustion chamber (1).

3. A device according to claim 1 or 2, **characterised in that** the calculation of the maximum cylinder pressures (p₂, p₃, p₄) can be started when a constant starter speed has been reached.

4. A device according to any of claims 1 to 3, **characterised in that** when the ignition-lock switch is connected to a switching-on input of a control device, the starting process can be carried out by a test starting device which does not close the ignition lock switch.

## Revendications

1. Dispositif servant à évaluer la compression dans les cylindres d'un moteur à combustion interne à plusieurs cylindres de véhicules à moteur, avec un démarreur électrique, le dispositif comprenant un dispositif de mesure raccordé à une unité d'exploitation (10), dispositif de mesure qui sert à détecter un signal proportionnel à l'intensité dans le démarreur,
caractérisé en ce qu'
à l'unité d'exploitation (10) est raccordé un capteur de pression (5), qui sert à détecter la pression (p) dans un cylindre (1) et en ce que l'unité d'exploitation (10) détermine un coefficient de proportionnalité (K) à partir d'une valeur maximale de la pression (p₁) du cylindre susceptible d'être détectée et à partir d'une valeur maximale (I₁) des amplitudes du signal (I_{A}) proportionnel à l'intensité dans le démarreur, qui peut être détecté en même temps que la valeur maximale (p₁) de la pression dans le cylindre, coefficient de proportionnalité (K) au moyen duquel on peut calculer les valeurs maximales (p₂, p₃, p₄) de la pression dans les cylindres des cylindres (2, 3, 4), qui ne sont pas pourvues d'un capteur de pression, à partir des valeurs maximales (I₂, I₃, I₄) des amplitudes qui correspondent à ces cylindres (2, 3, 4).

2. Dispositif selon la revendication 1,
caractérisé en ce que
le capteur de pression (5) peut être vissé à la place d'une bougie d'allumage dans la chambre de combustion du cylindre (1).

3. Dispositif selon la revendication 1 ou 2,
caractérisé en ce que
le calcul des valeurs maximales (p₂, p₃, p₄) de la pression dans les cylindres peut être démarré, quand il s'établit une vitesse de rotation constante dans le démarreur.

4. Dispositif selon l'une des revendications 1 à 3,
caractérisé en ce que
le processus de démarrage peut être effectué au moyen d'un dispositif de démarrage d'essai, qui ne conduit pas à fermer le contacteur de l'allumage, quand le contacteur de l'allumage est relié à l'entrée de branchement d'un appareil de commande.
